Europäisches Patentamt

European Patent Office

Office européen des brevets

(11) Publication number: **0 117 834**
**A1**

## EUROPEAN PATENT APPLICATION

(21) Application number: **84630025.9**

(22) Date of filing: **17.02.84**

(51) Int. Cl.³: **B 60 C 1/00,** C 08 L 21/00
// (C08L21/00, 25/06)

(30) Priority: **28.02.83 US 470839**

(71) Applicant: **THE GOODYEAR TIRE & RUBBER COMPANY, 1144 East Market Street, Akron, Ohio 44316 (US)**

(43) Date of publication of application: **05.09.84**
**Bulletin 84/36**

(72) Inventor: **Montgomery, Edward Charles, 3120 9th Street, Cuyahoga Falls Ohio 44221 (US)**
Inventor: **Scriver, Richard Martin, 13, Schrobilgen, Luxembourg (LU)**

(74) Representative: **Weyland, Joseph Jean Pierre, Goodyear International Tire Technical Center Patent Department Avenue Gordon Smith, L-7750 Colmar-Berg (LU)**

(84) Designated Contracting States: **DE FR GB IT LU**

(54) Pneumatic tire.

(57) Pneumatic rubber tire with sulfur vulcanized tread composition containing a dispersion of about 2 to about 15 phr of a particulate polystyrene resin having a softening point in the range of about 90°C to about 120°C. The tread composition provides a special benefit where the discrete particulate polystyrene resin dispersion has a softening point higher than the temperature of the tread under typical surface conditions and lower than the temperature generated at the tread surface under high abrasion conditions.

ACTORUM AG

0117834

# PNEUMATIC TIRE

## Field of Invention

This invention relates to tires. The invention particularly relates to pneumatic rubber tires having a rubber tread composition.

## Background of the Invention

Pneumatic rubber passenger and truck tires are composed of elements which conventionally include a tread of a rubber composition. The tread rubber is sometimes desirably compounded to provide a tire with a relatively low rolling resistance with reasonable wear and traction.

Although it is desired to compound the tire's tread composition to reduce the rolling resistance of the tire without substantially degrading the tire's traction features, often tire traction is expected to be somewhat sacrificed as may be evidenced by its decrease in wet and dry skid resistance.

Therefore, it is desirable to provide a pneumatic tire having a relatively low rolling resistance with a tread which provides reasonable traction.

## Disclosure and Practice of the Invention

In accordance with this invention, a pneumatic rubber tire is provided having a sulfur vulcanized rubber tread composition containing a dispersion of about 2 to about 15, preferably about 3 to about 10, phr of a particulate polystyrene resin having a softening point in the range of about 90°C. to about 120°C., preferably 90°C. to about 110°C.

The phr refers to parts by weight of specified material or ingredient per 100 parts by weight rubber.

The softening point of the polystyrene resin is determined by Ring and Ball method.

In the practice of this invention, the said sulfur vulcanized rubber tread preferably contains carbon black and/or silica, zinc oxide, cure accelerator, fatty acid and/or metal salt thereof such as for example, stearic acid or zinc stearate, rubber processing oil and said polystyrene resin.

Preferably, such tread composition is comprised of diene rubber, about 10 to about 60 phr rubber processing oil, about 40 to about 90 phr carbon black, about 2 to about 5 phr zinc oxide, about 2 to about 5 phr stearic acid and/or zinc stearate, about 0.5 to about 2 phr cure accelerator(s), about 0.5 to about 2.5 sulfur and said polystyrene resin in the range of about 0.5 to about 2.5 phr.

Such tread rubber composition is considered to be general in nature and selection and quantity of ingredients may be optimized for special applications.

However, it is considered that the particulate polystyrene resin application to the tread composition is a departure from conventional practice.

It is important to appreciate that it has been observed the introduction of the polystyrene resin into a tread composition tends to alter its cured stiffness so that it has found to be desirable to correspondingly adjust the amount of processing oil in a given recipe. Thus, in effect, the polystyrene resin would accordingly replace a part of the processing oil. For example, based on the tread compositions observed, it is preferred that each part (by weight) polystyrene replaces about 0.5 to about 1.5, more preferably about 0.7 to about 1.1, parts processing oil depending largely upon the starting recipe (without the polystyrene resin) and desired optimized rubber properties. Thus, in practice, the resin may replace about 5 to about 20 phr of the normally desired processing oil. In other words, if the polystyrene resin were not used, it would be expected that an amount of processing oil would be increased by about 5 to about 20 phr.

Although the required polystyrene resin is introduced into the tread rubber unvulcanized composite in a particulate form, it is possible that the polystyrene particles, during the relatively high shear mixing conditions of compounding the uncured tread rubber and/or during the curing of the tire itself under conditions of heat and pressure, are altered somewhat from their original particle shape, form and size, although it is believed that they are discrete entities, or particles, in the cured rubber tread itself.

Therefore, it is considered that the vulcanized tread composition is characterized by containing a substantially homogeneous dispersion therein of minute, discrete particles of polystyrene resin, where the softening point of said polystyrene resin is higher than the temperature generated in the tread under typical tire service conditions of inflation pressure, load and speed and lower than the temperature generated at the outer surface of the tread under high abrasion conditions.

Although the invention is not fully understood, it is believed that an observed improved tire tread skid resistance is due an active polystyrene resin participation in the outer portion of the tread. In particular, it has been observed that when heat generated during abrasive tire skid conditions causes the temperature in the region of the tread surface, namely the tread surface and extending somewhat into the tread composition itself, to rise to 120°C. to 150°C. or higher, and above the softening point of the polystyrene resin, the outer portion of the tread is softened (its harness is somewhat reduced) and results in a desirable increase in the traction and skid resistance of the tire. At other times, during normal or typical use of the tire the polystyrene resin remains somewhat passive within the tread in the temperature range (ranging up to about 70°C.) of normal tire operation, which is below the polystyrene resin's softening point so that the tire beneficially retains a relatively low rolling resistance.

As a result, in the practice of this invention, it has been observed that a tire with satisfactory skid resistance can be obtained while not substantially increasing the tire's rolling resistance.

The polystyrene resin is of a conventional type characterized as hereinbefore pointed out by having a softening point generally in the range of about 90°C. to about 120°C., preferably about 90°C.-110°C.

The tread rubber is preferably a sulfur vulcanized high unsaturation diene rubber. Representative of such high unsaturation rubbers, are natural rubber and synthetic rubbery polymers of cis 1,4-polyisoprene, cis 1,4-polybutadiene, vinyl 1,2-polybutadiene, styrene/1,3-butadiene copolymer and medium vinyl styrene/1,3-butadiene copolymer rubber.

The styrene/1,3-butadiene rubber can be of the aqueous emulsion polymerization or the hydrocarbon solvent solution polymerization derived types and conventionally contains about 5 to about 15, usually about 8 to 12, percent vinyl 1,2-content. The medium vinyl styrene/1,3-butadiene rubber contains about 15 to about 50, preferably about 20 to about 45, percent vinyl 1,2-content of the type usually prepared by solution polymerizing the monomers in the presence of a polar modifier.

The cis 1,4-polybutadiene rubber is of the conventional low vinyl 1,2-content in the range of about 2 to about 10 percent with a major portion being a cis 1,4-structure.

The vinyl 1,2-polybutadiene generally has a medium vinyl 1,2-content in the range of about 25 to about 50 percent or has a relatively high vinyl 1,2-content in the range of about 50 to about 75 percent. The remainder of the polymer structure of the vinyl 1,2-polybutadiene is largely cis and trans 1,4-structure. The medium vinyl 1,2-content polybutadiene is the preferred vinyl 1,2-polybutadiene.

In the practice of this invention, it is intended that both organic solvent solution and aqueous emulsion polymerized 1,3-butadiene can suitably be used for preparation of the low vinyl polybutadiene.

The cis 1,4-polyisoprene rubber typically has a cis 1,4-content in the range of about 96 to about 99 percent.

In the practice of this invention, the low vinyl and medium to high vinyl content of the polybutadiene rubbers refers to the weight percent of monomer content of the polymer in the 1,2-configuration. The low vinyl polybutadiene is generally considered to be what is thought of as a somewhat conventional polybutadiene.

The invention can be practiced with medium vinyl polybutadiene rubber produced by various processes, such as those already known in the art.

A preferred medium vinyl polybutadiene is of the type prepared by polymerizing 1,3-butadiene with a very small amount of divinyl benzene in a hydrocarbon solvent system, preferably an essentially non-polar aromatic solvent, with an alkyl lithium catalyst, and one or more polar catalyst modifiers to effect the polymer's vinyl content. For further details concerning an example of such type of medium vinyl polybutadiene and a method of preparation, reference may be made to U.S. Patent No. 4,230,841 and such patent is hereby incorporated herein by reference.

The tire can be built, shaped, molded and cured by various methods which will be readily apparent to those having skill in the art.

It is understood that the tire carcass rubber, including any belt reinforcement, which supports the tread may contain filament reinforcement and additives to enhance rubber adhesion to the filaments. Such filaments can be selected from at least one of metal, organic and inorganic filaments and are conventionally in the form of a twisted cable, or cord, of a multiple of such filaments.

Such pneumatic tires are conventionally comprised of a generally toroidal shaped carcass with an outer circumferential tread adapted to be ground contacting, spaced beads and sidewalls extending radially from and connecting said tread to said beads.

The tread can typically be applied in the building of the green tire in which the uncured, shaped tread is built onto the carcass following which the green tire is shaped and cured.

Alternately, the tread can be applied to a cured tire carcass from which the previous tread has been buffed or abraded away and the tread cured thereon as a retread.

The term "pneumatic tire" is used herein to refer to tires of both the pneumatic and semi-pneumatic type. Conventionally, pneumatic tires rely upon an internal air pressure to maintain its shape when mounted on a rim and placed under load, whereas a semi-pneumatic tire, although containing a gas such as air which might be under pressure in the tire cavity, does not completely rely upon the gas for support of the tire itself.

The rubber, polystyrene resin and rubber compounding ingredients can be mixed by conventional rubber mixing methods such as by mixing the resin particles with the rubber and most of the compounding ingredients prior to the addition of curatives.

In the practice of this invention, the polymer blend-tread can be integral with and adhered to various tire carcass substrate rubber compositions. Typically, such a rubber substrate composition is. at least one of a butadiene/styrene copolymer rubber, cis 1,4 polyisoprene (natural or synthetic rubber) and 1,4 polybutadiene.

It has been observed that cured rubber compositions having similar loss compliance values, when used as tire tread compositions, generally provide tires with similar rolling resistance characteristics. It has been observed that the lower the loss compliance value (less energy absorbed) for a tread composition, the lower the rolling resistance value becomes for the corresponding tire.

More specifically, for derivation of loss compliance values, a measure of energy absorbed by a cured rubber sample being deflected under compression force as the difference between energy applied to compress the rubber and energy expended by the sample as it rebounds has been found to be an important value in evaluating its ability to provide a tire tread which will reduce the tire's rolling resistance.

Such a measure or property of the rubber sample can be referred to as its loss compliance value. The loss compliance value relates to energy absorbed, under test, at a constant stress amplitude. Under such test, a block of cured compounded rubber is displaced at a relatively rapid frequency under continuous compression.

However, it should be appreciated that a tire demonstrating a comparatively reduced tire rolling resistance accomplished by using a tread rubber of reduced loss compliance value is considered to also potentially demonstrate a reduced traction, or wet skid resistance.

Tire tread traction is conventionally measured or evaluated by the tire's dry and/or wet skid resistance. The wet skid resistance is considered to be a more sensitive measure of traction that dry skid resistance.

It is an important feature of this invention that it has been observed that an addition of the required polystyrene resin to a tread rubber composition can provide a tire with a good skid resistance while maintaining its rolling resistance.

Various carbon blacks can be used for the purpose of this invention representative of which are, for example, intermediate super abrasion furnace black (N220) sometimes referred to as ISAF, super abrasion furnace black (N110) sometimes referred to as SAF, and high abrasion furnace black (N330) sometimes referred to as HAF.

Various oils compatible with rubber typically used but which are at least in part, replaced by the polystyrene resin are generally referred to as rubber processing oils. Representative of such oils are paraffinic, naphthenic, aromatic, pine tar and synthetic oils. Tread stock of compounded rubber generally utilizes a synthetic rubber processing oil of the aromatic/naphthenic type.

It is understood in the practice of this invention that in the compounding of the rubber various conventional materials can be used such as antioxidants, antiozonants, accelerators, fillers, plasticizers and the like.

The practice of this invention is further illustrated by reference to the following examples which are intended to be representative rather than restrictive of the scope of the invention. Unless otherwise indicated, all parts and percentages are by weight.

### Example 1

Rubber compositions were formulated to prepare an extruded tread stock comprised of the general recipe shown in Table 1. In Table 1 formulation B is experimental and represents the practice of this invention. In formulation A, a control comprised of a more conventional formulation is shown.

Pneumatic tires of conventional construction (grooved tread, sidewalls, spaced beads, and supporting fabric-reinforced carcass) were built, shaped and cured in a conventional tire mold. The tires were steel belted radial passenger tires designated as BR78-13 which indicates that they had a radial ply polyester cord-reinforced carcass with circumferential steel cord belts.

The tread rubber compound of the conventional control sample (A) and experiment (B) was composed of 30 parts polybutadiene rubber and 96.25 parts butadiene/styrene rubber which contained about 26.25 parts aromatic-type rubber processing oil. Thus, 70 parts butadiene/styrene rubber was used.

TABLE 1

| Components | (Control) A | (Experimental) B |
|---|---|---|
| Polybutadiene rubber | 30.00 | 30.00 |
| Butadiene/styrene rubber, oil extended (26.25 parts oil) | 96.25 | 96.25 |
| Polystyrene resin[1] | ----- | 8.0 |
| Carbon black (ISAF) | 70.00 | 70.00 |
| Waxes | 3.00 | 3.00 |
| Processing Oil[2] | 9.00 | 3.00 |
| Antioxidant | 2.00 | 2.00 |
| Accelerator | 1.00 | 1.00 |
| Zinc Oxide | 3.00 | 3.00 |
| Sulfur | 1.75 | 1.75 |

[1]Polystyrene flakes having a Ring and Ball softening point of about 97°C.-102°C. and obtained as Piccolastic D-100, a trademark of Hercules Incorporated.

[2]For the experimental tread, 6 parts of the 9 parts processing oil was replaced by 8 parts of the polystyrene resin.

The compounds (A and B) shown in Table 1 were mixed, extruded and applied to a radial ply rubber tire carcass and accompanying sidewalls. The tires A and B corresponding to tread compounds A and B were molded through shaping and curing under pressure to form the resulting vehicular tires.

Samples of such compounded rubber (A and B) were cured and tested and found to have a loss compliance of essentially equal values. The results of the test are shown in Table 2.

0117834

Table 2 (Loss Compliance Values)

| Temperature of Test (°C) | Control Composition (A) | Experimental Composition (B) |
|---|---|---|
| 27 | .0199 | .0192 |
| 38 | .0218 | .0212 |
| 49 | .0224 | .0214 |
| 60 | .0236 | .0224 |
| 71 | .0247 | .0241 |
| 82 | .0249 | .0248 |
| 93 | .0247 | .0240 |
| 104 | .0244 | .0255 |
| 116 | .0252 | .0258 |

Thus it would be expected that tire with a tread of Experimental Composition (B) would have similar rolling resistance to a tire with a tread of Control Composition A because of similar compliance values. It would also be conventionally expected that the Experimental tread composition would exhibit a similar traction or skid resistance as the Control tread composition.

The tires with tread compositions (A and B) were mounted on rims, inflated and submitted to testing. The test values for the control, (A) were normalized to a value of 100 for comparison purposes. The tire (B) with the experimental tread (B) was tested and its test values compared, on a normalized basis to the values of the control tire (A) as shown in Table 3.

Table 3

|  | Tire Test Results | |
| Test | Control A | Experimental B |
| Rolling Resistance | 100 | 100 |
| Energy Efficiency | 100 | 100 |
| Traction: | | |
| Wet[1] | 100 | 106 |
| Wet[2] | 100 | 104 |
| Dry[3] | 100 | 100 |

[1] Wet traction, towed trailer test
[2] Wet traction, automobile test
[3] Dry traction, towed trailer test

Thus, the tire with the experimental tread (B) of this invention demonstrated equal rolling resistance but surprisingly demonstrated an actual improvement in wet traction over tire with tread (A).

The rolling resistance was determined by mounting the tire and allowing it to be turned by a 67 inch diameter dynamometer under about 80 percent of its rated load at a rate equivalent to a vehicular speed of 50 mph and the drag force measured. The test is believed to be somewhat standard.

It is to be emphasized that the value for rolling resistance, was equal while improving wet skid resistance. Indeed, the results shown in Table 2 indicate the relative values for rolling resistance (Control B and Experimental A tires) to be 100 while the wet skid resistance of Experimental B tire was actually 106 (a desirably higher resistance) as compared to a normalized value of 100 for the control tire. The wet skid resistance values are considered to be a better and more sensitive test than the dry skid values which remained at a value of 100.

The towed trailer test was a standard test in which the tires (A and B) are mounted on an axle of a weighted, drawn trailer at various speeds and brakes of the trailer applied and skid force (peak and slide) measured and compared to a control.

While certain representative embodiments and details have been shown for the purpose of illustrating the invention, it will be apparent to those skilled in this art that various changes and modifications may be made therein without departing from the spirit or scope of the invention.

- 14 -

0117834

WHAT IS CLAIMED IS:

1. A pneumatic rubber tire having a sulfur vulcanized rubber tread composition containing a dispersion of about 2 to about 15 phr of a particulate polystyrene resin having a softening point in the range of about 90°C. to about 120°C.

2. The tire of Claim 1 where said sulfur vulcanized rubber tread contains carbon black and/or silica, zinc oxide, cure accelerator, stearic acid or zinc stearate, rubber processing oil and said polystyrene resin.

3. The tire of Claim 1 where its vulcanized tread composition is characterized by containing a substantially homogeneous dispersion therein of about 3 to about 10 phr of discrete particulate polystyrene resin having a softening point in the range of about 90°C. to about 110°C. where the softening point of said polystyrene resin is higher than the temperature generated in the tread under typical tire service conditions of inflation pressure, load and speed and lower than the temperature generated at the outer surface of the tread under high abrasion conditions.

4. The tire of Claim 3 where the temperature of said tread composition under typical service conditions is in the range of about 30°C. to about 80°C. and the temperature of the tread surface at high abrasion conditions is at least 120°C.

5.    The tire of Claim 1, where said tread rubber is a high unsaturation diene rubber selected from at least one of natural rubber and synthetic rubbery polymers of cis 1,4-polyisoprene, cis 1,4-polybutadiene, vinyl 1,2-polybutadiene, styrene/1,3-butadiene copolymer and medium vinyl styrene/1,3-butadiene copolymer rubber.

6.    The tire of Claim 3, where said tread rubber is a high unsaturation diene rubber selected from at least one of natural rubber and synthetic rubbery polymers of cis 1,4-polyisoprene, cis 1,4-polybutadiene, vinyl 1,2-polybutadiene, styrene/1,3-butadiene copolymer and medium vinyl styrene/1,3-butadiene copolymer rubber.

7.    The tire of Claim 6 where said cis 1,4-polybutadiene rubber has a vinyl 1,2-content in the range of about 2 to about 10 percent, said vinyl 1,2-polybutadiene has a medium vinyl 1,2-content in the range of about 25 to about 50 percent, the styrene/1,3-butadiene copolymer rubber contains about 8 to about 12 percent vinyl 1,2-content and the medium vinyl styrene/1,3-butadiene rubber contains about 15 to about 50 percent vinyl 1,2-content.

# EUROPEAN SEARCH REPORT

European Patent Office

0117834
Application number

EP 84 63 0025

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | PATENTS ABSTRACTS OF JAPAN, vol. 5, no. 180 (C-79)[852], 19th November 1981 & JP - A - 56 103 232 (TOYO GOMU KOGYO K.K.) 18-08-1981 * Abstract * | 1-7 | B 60 C  1/00<br>C 08 L  21/00 //<br>(C 08 L  21/00<br>C 08 L  25/06 ) |
| A | DE-B- 845 391 (BASF)<br><br>* Claim 1 * | | |
| A | W. KLEEMANN: "Mischungen für die Elastverarbeitung", 1982, pages 328-333, VEB Deutscher Verlag für Grundstoffindustrie, Leipzig, DD<br>* Page 331 * | | **TECHNICAL FIELDS SEARCHED (Int. Cl. 3)**<br><br>B 60 C<br>C 08 L |

The present search report has been drawn up for all claims

| Place of search | Date of completion of the search | Examiner |
|---|---|---|
| THE HAGUE | 30-05-1984 | VAN HUMBEECK F.W.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82